# FASCICULE DE BREVET EUROPEEN

(11) **EP 2 540 010 B1**
(45) Date de publication et mention de la délivrance du brevet: **01.01.2020**
(21) Numéro de dépôt: 11702259.0
(22) Date de dépôt: 09.02.2011
(51) Int. Cl.: H04B 7/185

(54) **PROCEDE POUR L'ALLOCATION OPTIMISEE D'UNE RESSOURCE DE COMMUNICATION SATELLITE ET SYSTEME DE COMMUNICATION ASSOCIE**
VERFAHREN ZUR OPTIMIERTEN ZUWEISUNG VON SATELLITENKOMMUNIKATIONSRESSOURCEN UND ZUGEHÖRIGES KOMMUNIKATIONSSYSTEM
METHOD FOR THE OPTIMIZED ALLOCATION OF A SATELLITE COMMUNICATION RESOURCE AND ASSOCIATED COMMUNICATION SYSTEM

(30) Priorité: 26.02.2010 FR 1000804
(43) Date de publication de la demande: 02.01.2013
(73) Titulaire: THALES, 92400 Courbevoie (FR)
(72) Inventeur: GINESTE, Mathieu, F-06156 Cedex Cannes La Bocca (FR)
(74) Mandataire: Brunelli, Gérald
(86) Numéro de dépôt international: PCT/EP2011/051852
(87) Numéro de publication internationale: WO 2011/104114

(56) Documents cités:
- WO-A1-2009/065958
- JP-A- 2008 211 737
- US-A1- 2003 045 285
- US-A1- 2004 076 147
- US-A1- 2007 255 850

## Description

L'invention concerne les communications aéronautiques et, plus particulièrement, la gestion du trafic aérien.

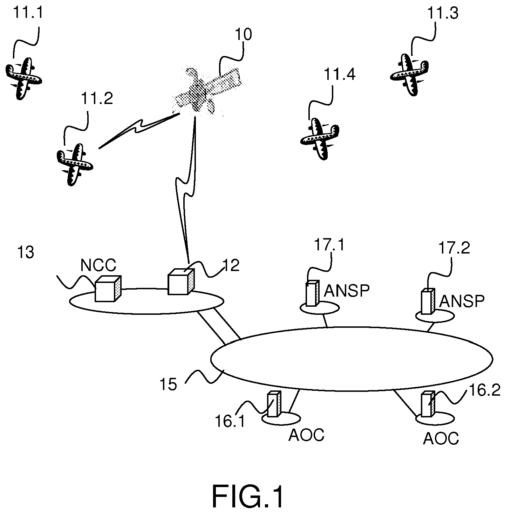

La figure 1 présente un système de communication aéronautique entre des aéronefs 11.1, 11.2, 11.3, 11.4 et une unité au sol 12. Le système utilise une ressource de communication satellite, dite ressource voie retour, permettant de transmettre des messages depuis les aéronefs 11.1, 11.2, 11.3, 11.4 vers l'unité au sol 12. Chacun des aéronefs 11.1, 11.2, 11.3, 11.4 comporte des applications embarquées et un terminal pour communiquer avec l'unité au sol. Les messages envoyés par les aéronefs sont associés à des services. On peut citer par exemple : le service COTRAC (acronyme de l'expression anglo-saxonne Common Trajectory Coordination) qui permet au pilote et au contrôleur du trafic aérien de coordonner la trajectoire de l'aéronef en temps réel. Un message d'un service qui a une certaine taille, est associé à une priorité et une exigence de délai de bout en bout du réseau de communication.

Le réseau formé par les aéronefs et l'unité au sol est géré par un centre de contrôle 13 (ou NCC pour Network Control Center) chargé de partager la ressource de communication satellite entre les aéronefs (dont le nombre peut être supérieur à plusieurs milliers).

L'unité au sol transmet les messages vers un réseau terrestre 15 reliant des centres d'opération de compagnie 16.1, dits AOC (acronyme de l'expression anglo-saxonne Airline Operational Control) et des contrôleurs de trafic aérien 17.1, connecté au réseau de gestion du trafic aérien via des fournisseurs de service de navigation aérienne 17.2 dits ANSP (acronyme de l'expression anglo-saxonne Air Navigation Service Provider).

Les profils de trafic utilisés dans les communications aéronautiques pour la gestion du trafic aérien ont des caractéristiques très spécifiques. La première caractéristique est que les messages émis par les aéronefs sont très sporadiques. La fréquence d'émissions des messages par les aéronefs est en effet très faible. La seconde caractéristique est qu'il existe des contraintes temporelles très strictes à respecter pour les messages d'un service. Par exemple, le délai d'acheminement d'un bout à l'autre du réseau doit être respecté par 95% des messages.

Les centres de contrôle selon l'art connu ne prennent pas en compte ces contraintes temporelles. Or même avec des charges de trafic assez faibles impliquant peu d'aéronefs, des pics de trafic temporaires peuvent apparaître. Ceci peut donc entraîner un non respect des contraintes temporelles en particulier pour les messages les plus longs.

On connaît des méthodes d'allocation centralisée permettant un accès multiple à une ressource dans un contexte de télécommunications, prenant en compte les contraintes des services. Ces méthodes reposent sur une hypothèse d'un flux de trafic plus ou moins soutenu et ne sont pour la plupart pas applicables au contexte des communications aéronautiques. En utilisant les méthodes applicables aux communications pour la gestion du trafic aérien, on constate que même avec un débit moyen de communication largement inférieur à la capacité de la ressource, certains services ne respectent pas leurs exigences temporelles.

On connaît également des méthodes d'allocation dites aléatoires permettant un accès multiple à une ressource et ne nécessitant pas de réservation préalable ni de gestion centralisée de la ressource. L'avantage de ce type d'accès est qu'il est facile à mettre en œuvre et permet un accès immédiat à la ressource, dans le cas où il n'y a pas de collisions entre des fragments de messages émis par différents terminaux. Dans le cas contraire, des retransmissions de ces fragments sont nécessaires. On comprend donc que ce type d'accès ne permet pas de garantir des exigences temporelles fortes, en particulier pour des messages longs pour lesquels la probabilité de collision d'un des fragments est grande.

Par exemple, il est connu le document US 2007/255850 A1 divulguant un procédé pour l'allocation optimisée d'une ressource de communication permettant de transmettre des messages depuis des premières unités vers une deuxième unité, mais ne pouvant garantir des exigences temporelles fortes, notamment pour les messages longs.

L'invention vise à pallier les problèmes cités précédemment en proposant un procédé pour l'allocation temporelle d'une ressource de communication satellite et un système associé permettant de réduire le nombre de messages délivrés hors de leur contrainte temporelle.

L'invention peut également s'appliquer à d'autres domaines, ayant des caractéristiques similaires et incluant des communications à caractère critique impliquant des contraintes temporelles strictes.

A cet effet, l'invention a pour objet un procédé pour l'allocation optimisée d'une ressource de communication permettant de transmettre des messages depuis des premières unités vers une deuxième unité, chacune des premières unités comportant des applications embarquées et un terminal pour communiquer avec l'unité au sol, un message étant associé à une exigence de délai et une taille, le procédé étant caractérisé en ce qu'il comporte les étapes suivantes :
- la réception, par le terminal, de messages provenant des applications embarquées et pour chaque message, le stockage d'une référence temporelle indiquant la date de réception par le terminal du message,
- l'émission, par le terminal, d'une requête de capacité pour au moins un message, la requête indiquant la taille du message, l'exigence de délai associée au message et la référence temporelle du message,
- la réception, par un centre de contrôle de la ressource de communication, de la requête de capacité,
- l'allocation de la ressource de communication aux terminaux des premières unités, en réalisant un calcul d'un ordonnancement centralisé des messages en prenant en compte la référence temporelle et l'exigence de délai des messages,
- la diffusion, à destination des terminaux des premières unités, d'un plan d'allocation déterminé à partir de l'ordonnancement calculé;
le calcul d'un temps minimum d'émission d'un message par le terminal à partir de la taille du message, le calcul de l'ordonnancement des messages prenant aussi en compte le temps minimum d'émission des messages.

L'invention permet de mieux prendre en compte les caractéristiques de chacun des messages en incorporant dans la requête de capacité la date d'entrée du message dans le système et le type de service associé au message, indiquant son exigence temporelle.

En réalisant une allocation appropriée de la ressource, l'invention permet de réduire le nombre de messages délivrés hors de leur contrainte temporelle et donc de respecter les exigences temporelles liées aux services de gestion du trafic aérien.

En optimisant l'allocation de la ressource de communication, l'invention a aussi pour avantage de ne pas avoir à augmenter la capacité de cette ressource pour améliorer le respect des exigences temporelles.

Contre toute attente, l'augmentation du trafic générée par l'augmentation de la taille de requête ne conduit pas à une saturation du réseau. Au contraire la transmission de ces informations utiles à l'allocation de la ressource de communications permet d'améliorer le trafic sur le réseau et de respecter les exigences temporelles des services.

L'invention sera mieux comprise et d'autres avantages apparaîtront à la lecture de la description détaillée faite à titre d'exemple non limitatif et à l'aide des figures parmi lesquelles :
La figure 1, déjà présentée, représente un système de communication selon l'art connu.
La figure 2 représente un organigramme du procédé pour l'allocation temporelle d'une ressource de communication selon l'invention.
La figure 3 présente un exemple de découpage temporel en trames et en créneaux temporels.
La figure 4 représente un système de communication selon l'invention.
Les figures 5a et 5b présentent respectivement des résultats de simulations en appliquant une première et une deuxième méthode d'allocation.

L'invention concerne un procédé pour l'allocation optimisée d'une ressource de communication, vis à vis de contraintes temporelles, permettant de transmettre des messages depuis des premières unités vers une deuxième unité. Chacune des premières unités comporte des applications embarquées et un terminal pour communiquer avec la deuxième unité, un message étant associé à une priorité, une exigence de délai et une taille. On appelle terminal un moyen permettant d'établir une communication entre une première unité et la deuxième unité via la ressource de communication. Par délai, on entend le délai de bout en bout du réseau de communication.

Dans la suite de la description, l'invention est illustrée sur l'exemple d'applications non limitatif où : la ressource de communication est une ressource de communication satellite, les premières unités sont des aéronefs et la deuxième unité est une unité au sol.

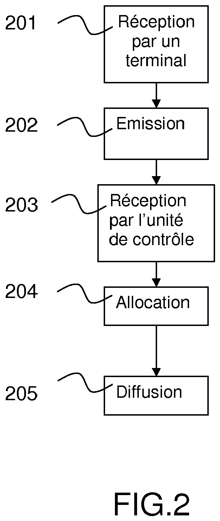

La figure 2 représente un organigramme du procédé pour l'allocation temporelle d'une ressource de communication selon l'invention. Le procédé selon l'invention comporte les étapes suivantes :
La réception 201, par le terminal, de messages provenant des applications embarquées et pour chaque message, le stockage d'une référence temporelle indiquant la date de réception par le terminal du message. Un terminal comporte au moins une file d'attente pour réceptionner les messages. A chaque arrivée d'un message dans une file d'attente, une référence temporelle est enregistrée.

L'émission 202, par le terminal, d'une requête de capacité pour au moins un message, la requête indiquant la taille du message, l'exigence de délai de bout en bout du réseau de communication associée au message, la référence temporelle du message et, éventuellement, une priorité associée au message. En pratique, la requête de capacité peut contenir une information du type de service associé au message. Le service indique alors la priorité et l'exigence de délai du message de manière implicite. Avant de transmettre le message en utilisant la ressource satellite, il est nécessaire d'effectuer une réservation de cette ressource par le biais d'une requête de capacité. Cette requête de capacité comprend les principales caractéristiques du message. La requête est destinée au centre de contrôle 13 en charge de la répartition de la ressource entre les aéronefs.

La réception 203, par le centre de contrôle 13 de la ressource de communication, de la requête de capacité.

L'allocation 204 de la ressource de communication aux terminaux des premières unités, en réalisant un calcul d'un ordonnancement des messages en prenant en compte la référence temporelle et l'exigence de délai associée aux messages.

La diffusion 205, à destination des terminaux des aéronefs, d'un plan d'allocation déterminé à partir de l'ordonnancement des messages calculé.

En pratique, le centre de contrôle 13 reçoit en continue des requêtes de capacité provenant des différents aéronefs. A intervalles régulier, il calcule un ordonnancement des différents messages. Puis, un plan d'allocation est déterminé à partir de cet ordonnancement. Le plan d'allocation définit quel terminal a le droit d'émettre sur la ressource de communication pour une plage de temps donnée. L'ordonnancement et le plan d'allocation sont recalculés, par exemple, toutes les secondes en prenant en compte les nouvelles requêtes de capacités.

Selon une première variante de réalisation, le procédé selon l'invention comporte en outre une étape de calcul, pour chaque message, d'une date de réception au plus tard. La date de réception au plus tard d'un message est égale à sa date de réception par le terminal plus son exigence de délai. La date de réception par le terminal est déterminée grâce à la référence temporelle stockée. Lors du calcul de l'ordonnancement, les messages sont ordonnés par ordre croissant de date de réception au plus tard. Cette première stratégie vise à ordonner au plus tôt les messages dont les dates limites de réception sont les plus proches.

Selon une deuxième variante de réalisation, le procédé selon l'invention comporte en outre le calcul d'un temps minimum d'émission d'un message par le terminal à partir de la taille du message. Ce temps d'émission du message est pris en compte pour l'ordonnancement, il peut être par exemple retranché à la date de réception au plus tard d'un message tel que calculé précédemment. Dans ce cas, lors du calcul de l'ordonnancement, les messages sont ordonnés par ordre croissant de date de réception au plus tard moins le temps d'émission des messages.

Selon une variante de l'invention, chaque message étant associé à une priorité, la requête de capacité indique une information de priorité associée au message (de manière explicite ou implicite), l'étape d'allocation 204 de la ressource de communication aux terminaux comportant en outre un traitement des requêtes par ordre de priorité des messages associés, le calcul d'ordonnancement étant effectué pour les messages de priorité égale. Cette variante a pour avantage de privilégier les messages les plus prioritaires, indépendamment des exigences temporelles, tout en prenant en compte ces exigences temporelles pour les messages présentant une priorité identique.

Selon une variante de l'invention, les requêtes de capacité sont émises selon un mode dit aléatoire c'est-à-dire sans réservation préalable de la ressource de communication.

Ce mode de fonctionnement a pour avantage d'être facile à mettre en œuvre. Cependant, il présente un risque de collisions entre plusieurs requêtes de capacité. Comme ces requêtes sont relativement peu fréquentes, le risque de collisions est assez faible. Par ailleurs ce mode de fonctionnement ne nécessite pas de moyen de gestion centralisé concernant l'allocation des requêtes.

Selon une autre variante de l'invention, les requêtes de capacité sont émises sur un créneau temporel dédié, chacun des aéronefs ayant son propre créneau temporel dédié à l'émission de requête de capacité.

Selon une variante de l'invention, la référence temporelle est exprimée sous la forme d'une date absolue. Cette variante a pour avantage d'être facile à mettre en œuvre. En effet, tous les terminaux des aéronefs sont déjà synchronisés avec le centre de contrôle pour pouvoir respecter le plan d'allocation calculé. Mais la date exprimée de façon absolue peut demander une quantité de ressource de communication importante pour être transmise.

Selon une autre variante de l'invention, la référence temporelle est exprimée sous la forme d'une date relative. Cette variante permet de transmettre une date de façon plus économique en termes de ressource de communication.

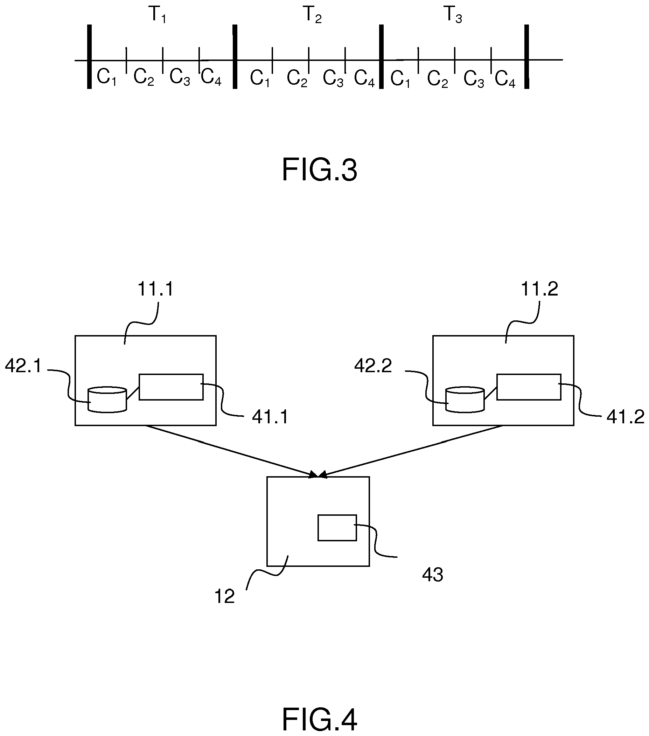

Pour pouvoir facilement répartir la ressource de communication entre les aéronefs, celle-ci est découpée temporellement en trames identifiées par des numéros. Chaque trame est, elle aussi, découpée temporellement en créneaux (ou time slot en anglais) identifiés par des numéros. La figure 3 présente un exemple de découpage temporel en trames et en créneaux. La figure présente trois trames T1, T2, T3 comportant chacune quatre créneaux C1, C2, C3, C4.

Avantageusement, la date relative est exprimée sous la forme d'un numéro de trame et d'un numéro de créneau. Le centre de contrôle et tous les terminaux aéronefs partagent la même numérotation de trame et de créneau. Cette référence temporelle a donc pour avantage d'être implicitement synchronisée.

L'invention concerne aussi un système de communication entre des aéronefs et une unité au sol utilisant une ressource de communication satellite permettant de transmettre des messages depuis les aéronefs vers l'unité au sol. La figure 4 représente un système de communication selon l'invention. Chacun des aéronefs 11.1, 11.2 comporte des applications embarquées et un terminal 41.1, 41.2 pour communiquer avec l'unité au sol. Un message est associé à une priorité, une exigence de délai et une taille.

Les terminaux 41.1, 41.2 des aéronefs comportent des moyens pour stocker 42.1, 42.2 une référence temporelle associée aux messages reçus.

Le centre de contrôle 13 comporte des moyens de calcul 43 d'un plan d'allocation en fonction des priorités, des exigences de délai et des références temporelles associées aux messages. Ces moyens de calcul 43 comprennent : des moyens de traitement des requêtes par ordre de priorité et des moyens de calcul d'un ordonnancement des messages présentant des priorités identiques en prenant en compte la référence temporelle et l'exigence de délai des messages.

Tout comme le procédé, le système selon l'invention peut également s'appliquer à d'autres domaines, ayant des caractéristiques similaires et incluant des communications à caractère critique impliquant des contraintes temporelles strictes.

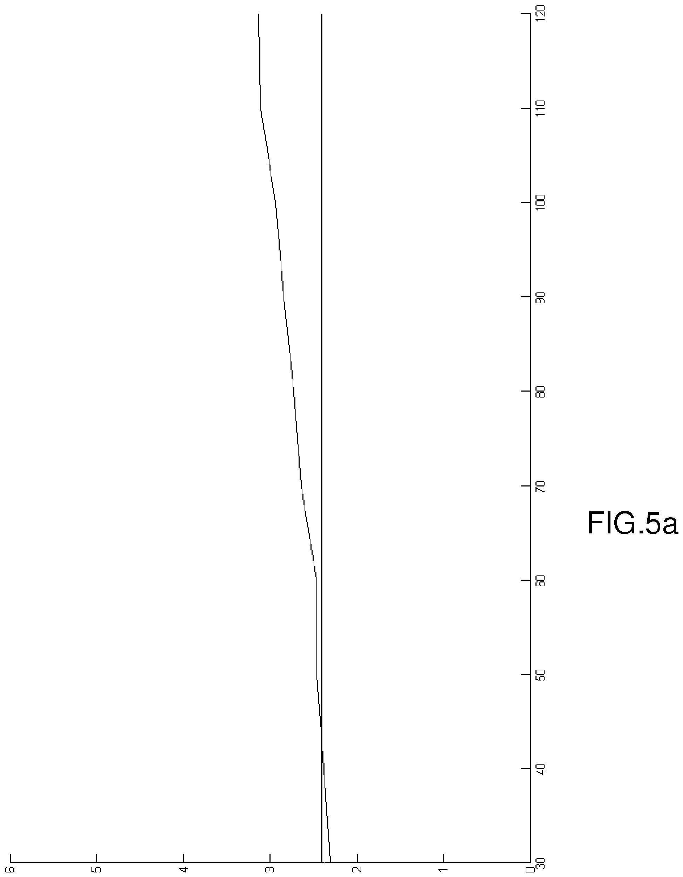

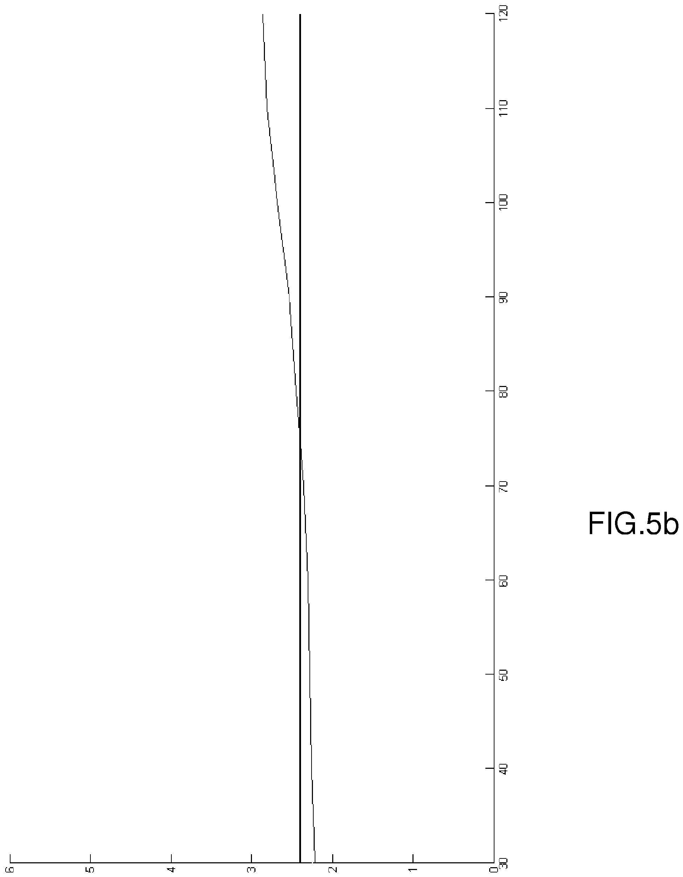

Les figures 5a et 5b présentent respectivement des résultats de simulations en appliquant une première et une deuxième méthode d'allocation. L'axe des abscisses représente le nombre d'aéronefs dans les simulations et l'axes des ordonnées les temps de transmission pour quatre-vingt quinze pourcent des messages. La courbe représente les temps de transmission pour quatre-vingt quinze pourcent des messages d'un service (le service COTRAC dans l'exemple) en fonction du nombre d'aéronefs utilisant la ressource. Une ligne horizontale indique l'exigence de délai associé au service (2.4 secondes). Logiquement plus le nombre d'aéronefs est important plus les délais de traitement des messages s'allongent.

La première méthode consiste à appliquer une allocation proportionnelle de la ressource entre l'ensemble des aéronefs. Les requêtes sont traitées par ordre de priorité et toutes les requêtes d'une même priorité sont servies de manière égale.

En appliquant cette première méthode, on constate que les exigences temporelles des services sont respectées jusqu'à quarante aéronefs. Au delà, elles ne sont plus respectées.

La deuxième méthode correspond au procédé selon l'invention. On constate que jusqu'à soixante dix aéronefs, les exigences temporelles des services sont respectées. Donc à ressource égale, la mise en œuvre de l'invention permet à un plus grand nombre d'aéronefs d'utiliser la ressource simultanément.

## Revendications

1. Procédé pour l'allocation optimisée d'une ressource de communication permettant de transmettre des messages depuis des premières unités vers une deuxième unité, chacune des premières unités comportant des applications embarquées et un terminal pour communiquer avec la deuxième unité, un message étant associé à une exigence de délai et une taille, le procédé comportant les étapes suivantes :
- la réception (201), par le terminal, de messages provenant des applications embarquées et pour chaque message, le stockage d'une référence temporelle indiquant la date de réception par le terminal du message,
- l'émission (202), par le terminal, d'une requête de capacité pour au moins un message, la requête indiquant la taille du message, l'exigence de délai associée au message et la référence temporelle du message,
- la réception (203), par un centre de contrôle (13) de la ressource de communication, de la requête de capacité,
- l'allocation (204) de la ressource de communication aux terminaux des premières unités, en réalisant un calcul d'un ordonnancement centralisé des messages en prenant en compte la référence temporelle et l'exigence de délai des messages,
- la diffusion (205), à destination des terminaux des premières unités, d'un plan d'allocation déterminé à partir de l'ordonnancement calculé, et
- le calcul d'un temps minimum d'émission d'un message par le terminal à partir de la taille du message, le calcul de l'ordonnancement des messages prenant aussi en compte le temps minimum d'émission des messages.

2. Procédé pour l'allocation optimisée d'une ressource de communication selon la revendication 1, **caractérisé en ce qu'**il comporte en outre une étape de calcul, pour chaque message, d'une date d'émission au plus tard, la date d'émission au plus tard d'un message étant égale à sa date de réception par le terminal plus son exigence de délai, et **en ce que** les messages sont ordonnés par ordre de date d'émission au plus tard croissant.

3. Procédé pour l'allocation optimisée d'une ressource de communication selon l'une des revendications précédentes, **caractérisé en ce que**, chaque message étant associé à une priorité, la requête de capacité indique une information de priorité associée au message, l'étape d'allocation (204) de la ressource de communication aux terminaux des premières unités comportant en outre un traitement des requêtes par ordre de priorité des messages associés, le calcul d'ordonnancement étant effectué pour les messages de priorité égale.

4. Procédé pour l'allocation optimisée d'une ressource de communication selon l'une des revendications précédentes, **caractérisé en ce que** la ressource de communication étant découpée temporellement en trames identifiées par des numéros, chaque trame étant découpée temporellement en créneaux identifiés par des numéros.

5. Procédé pour l'allocation optimisée d'une ressource de communication selon l'une des revendications précédentes, **caractérisé en ce que** les requêtes de capacité sont émises sans réservation préalable de la ressource de communication.

6. Procédé pour l'allocation optimisée d'une ressource de communication selon la revendication 4, **caractérisé en ce que** les requêtes de capacité sont émises sur un créneau temporel dédié, chacun des aéronefs ayant son propre créneau temporel dédié à l'émission de requête de capacité.

7. Procédé pour l'allocation optimisée d'une ressource de communication selon l'une des revendications précédentes, **caractérisé en ce que** la référence temporelle est exprimée sous la forme d'une date absolue.

8. Procédé pour l'allocation optimisée d'une ressource de communication selon l'une des revendications 1 à 6, **caractérisé en ce que** la référence temporelle est exprimée sous la forme d'une date relative.

9. Procédé pour l'allocation optimisée d'une ressource de communication selon les revendications 4 et 8 pris en combinaison, **caractérisé en ce que** la date relative est exprimée sous la forme d'un numéro de trame et d'un numéro de créneau.

10. Procédé pour l'allocation optimisée d'une ressource de communication selon l'une des revendications précédentes, **caractérisé en ce que** la ressource de communication est une ressource de communication satellite, **en ce que** les premières unités sont des aéronefs et **en ce que** la seconde unité est une unité au sol.

11. Système de communication entre des aéronefs (11.1, ..., 11.4) et une unité au sol (12) utilisant une ressource de communication satellite, le système comprenant:
une unité au sol (12);
des aéronefs (11.1, ..., 11.4), chacun des aéronefs comportant des applications embarquées et un terminal (41.1, 41.2) pour communiquer avec l'unité au sol (12), de manière à transmettre des messages depuis les applications embarquées des aéronefs (11.1, ..., 11.4) vers l'unité au sol (12), un message étant associé à une priorité, une exigence de délai et une taille, dans lequel les terminaux (41.1, 41.2) des aéronefs comportent des moyens de réception de messages provenant des applications embarquées et des moyens de réception du plan d'allocation de la ressource provenant d'un centre de contrôle (13), des moyens de stockage (42.1, 42.2) d'une référence temporelle associée à chaque message reçu provenant des applications embarquées, des moyens d'émission vers le centre de contrôle (13) d'une requête de capacité pour au moins un message, la requête indiquant la taille du message, l'exigence de délai associée au message et la référence temporelle du message;
un centre de contrôle (13) gérant la ressource et comportant des moyens de réception de la requête de capacité provenant des terminaux, des moyens de calcul (43) d'un ordonnancement centralisé des messages en fonction de l' exigence de délai et des références temporelles associées aux messages, et des moyens de diffusion à destination des terminaux du plan d'allocation déterminé à partir de l'ordonnancement calculé;
des moyens de calcul d'un temps minimum d'émission d'un message par le terminal à partir de la taille du message, le calcul de l'ordonnancement des messages prenant aussi en compte le temps minimum d'émission des messages.

## Patentansprüche

1. Verfahren zur optimierten Zuordnung einer Kommunikationsressource, die die Übertragung von Nachrichten von ersten Einheiten zu einer zweiten Einheit zulässt, wobei jede der ersten Einheiten integrierte Anwendungen und ein Terminal zum Kommunizieren mit der zweiten Einheit umfasst, wobei eine Nachricht mit einer Verzögerungsanforderung und einer Größe verbunden ist, wobei das Verfahren die folgenden Schritte beinhaltet:
- Empfangen (201) von Nachrichten durch das Terminal, die von integrierten Anwendungen kommen, und für jede Nachricht Speichern einer zeitlichen Referenz, die den Zeitpunkt des Empfangs der Nachricht durch das Terminal anzeigt,
- Senden (202) einer Kapazitätsanforderung für wenigstens eine Nachricht durch das Terminal, wobei die Anforderung die Größe der Nachricht, die mit der Nachricht assoziierte Verzögerungsanforderung und die zeitliche Referenz der Nachricht anzeigt,
- Empfangen (203) der Kapazitätsanforderung durch ein Kontrollzentrum (13) der Kommunikationsressource,
- Zuordnen (204) der Kommunikationsressource zu den Terminals der ersten Einheiten unter Durchführung einer zentralisierten Terminierungsberechnung der Nachrichten unter Berücksichtigung der zeitlichen Referenz und der Verzögerungsanforderung der Nachrichten,
- Verteilen (205) eines auf der Basis der berechneten Terminierung bestimmten Zuordnungsplans zu den Terminals der ersten Einheiten, und
- Berechnen einer Mindestzeit zum Senden einer Nachricht durch das Terminal auf der Basis der Größe der Nachricht, wobei die Berechnung des Terminierung der Nachrichten auch die Mindestzeit zum Senden der Nachrichten berücksichtigt.

2. Verfahren zur optimierten Zuordnung einer Kommunikationsressource nach Anspruch 1, **dadurch gekennzeichnet, dass** es ferner einen Schritt des Berechnens eines spätesten Sendezeitpunkts für jede Nachricht beinhaltet, wobei der spätere Sendezeitpunkt einer Nachricht gleich ihrem Empfangszeitpunkt durch das Terminal plus ihrer Verzögerungsanforderung ist, und dadurch, dass die Nachrichten nach zunehmend spätesten Sendezeitpunkten geordnet werden.

3. Verfahren zur optimierten Zuordnung einer Kommunikationsressource nach einem der vorherigen Ansprüche, **dadurch gekennzeichnet, dass**, da jede Nachricht mit einer Priorität assoziiert ist, die Kapazitätsanforderung eine mit der Nachricht assoziierte Prioritätsinformation anzeigt, wobei der Schritt (204) des Zuordnens der Kommunikationsressource zu den Terminals der ersten Einheiten ferner eine Verarbeitung von Anforderungen nach Prioritätsordnung der assoziierten Nachrichten beinhaltet, wobei die Terminierungsberechnung für die Nachrichten mit gleicher Priorität erfolgt.

4. Verfahren zur optimierten Zuordnung einer Kommunikationsressource nach einem der vorherigen Ansprüche, **dadurch gekennzeichnet, dass**, da die Kommunikationsressource zeitlich in durch Nummern identifizierte Frames unterteilt ist, jeder Frame zeitlich in durch Nummern identifizierte Schlitze unterteilt ist.

5. Verfahren zur optimierten Zuordnung einer Kommunikationsressource nach einem der vorherigen Ansprüche, **dadurch gekennzeichnet, dass** die Kapazitätsanforderungen ohne vorherige Reservierung der Kommunikationsressource gesendet werden.

6. Verfahren zur optimierten Zuordnung einer Kommunikationsressource nach Anspruch 4, **dadurch gekennzeichnet, dass** die Kapazitätsanforderungen in einem dedizierten Zeitschlitz gesendet werden, wobei jedes Luftfahrzeug seinen eigenen dedizierten Zeitschlitz zum Senden von Kapazitätsanforderungen hat.

7. Verfahren zur optimierten Zuordnung einer Kommunikationsressource nach einem der vorherigen Ansprüche, **dadurch gekennzeichnet, dass** die zeitliche Referenz in Form eines absoluten Zeitpunkts ausgedrückt wird.

8. Verfahren zur optimierten Zuordnung einer Kommunikationsressource nach einem der Ansprüche 1 bis 6, **dadurch gekennzeichnet, dass** die zeitliche Referenz in Form eines relativen Zeitpunkts ausgedrückt wird.

9. Verfahren zur optimierten Zuordnung einer Kommunikationsressource nach den Ansprüchen 4 und 8 in Kombination, **dadurch gekennzeichnet, dass** der relative Zeitpunkt in Form einer Frame-Nummer und einer Schlitznummer ausgedrückt wird.

10. Verfahren zur optimierten Zuordnung einer Kommunikationsressource nach einem der vorherigen Ansprüche, **dadurch gekennzeichnet, dass** die Kommunikationsressource eine Satellitenkommunikationsressource ist, dadurch, dass die ersten Einheiten Luftfahrzeuge sind, und dadurch, dass die zweite Einheit eine Bodeneinheit ist.

11. System zum Kommunizieren zwischen Luftfahrzeugen (11.1, ..., 11.4) und einer Bodeneinheit (12), die eine Satellitenkommunikationsressource benutzt, wobei das System Folgendes umfasst:
eine Bodeneinheit (12);
Luftfahrzeuge (11.1, ..., 11.4), wobei jedes der Luftfahrzeuge integrierte Anwendungen und ein Terminal (41.1, 41.2) zum Kommunizieren mit der Bodeneinheit (12) umfasst, um Nachrichten von den integrierten Anwendungen der Luftfahrzeuge (11.1, ..., 11.4) zur Bodeneinheit (12) zu übertragen,
wobei eine Nachricht mit einer Priorität, einer Verzögerungsanforderung und einer Größe assoziiert ist, wobei die Terminals (41.1, 41.2) der Luftfahrzeuge Mittel zum Empfangen von von den integrierten Anwendungen kommenden Nachrichten und Mittel zum Empfangen des von einem Kontrollzentrum (13) kommenden Zuordnungsplans der Ressource umfassen,
Mittel (42.1, 42.2) zum Speichern einer zeitlichen Referenz, assoziiert mit jeder von den integrierten Anwendungen kommenden empfangenen Nachricht, Mittel zum Senden einer Kapazitätsanforderung für wenigstens eine Nachricht zu dem Kontrollzentrum (13), wobei die Anforderung die Größe der Nachricht, die mit der Nachricht assoziierte Verzögerungsanforderung und die zeitliche Referenz der Nachricht anzeigt;
wobei ein Kontrollzentrum (13) die Ressource verwaltet und Mittel zum Empfangen der von den Terminals kommenden Kapazitätsanforderung, Mittel (43) zum Berechnen eines zentralisierten Terminierung der Nachrichten in Abhängigkeit von der Verzögerungsanforderung und von mit den Nachrichten assoziierten zeitlichen Referenzen und Mittel zum Verteilen des auf der Basis der berechneten Terminierung bestimmten Zuordnungsplans zu den Terminals umfasst;
Mittel zum Berechnen einer Mindestzeit zum Senden einer Nachricht durch das Terminal auf der Basis der Größe der Nachricht, wobei die Berechnung der Terminierung der Nachrichten auch die Mindestzeit zum Senden der Nachrichten berücksichtigt.

## Claims

1. A method for the optimized allocation of a communication resource enabling the transmission of messages from first units towards a second unit, each of the first units having embedded applications and a terminal for communicating with the second unit, a message being associated with a deadline requirement and a size, the method comprising the following stapes:
- reception (201), by the terminal, of messages originating from the embedded applications and for each message, the storage of a time reference indicating the date of reception by the terminal of the message,
- transmission (202), by the terminal, of a capacity request for at least one message, the request indicating the size of the message, the deadline requirement associated with the message and the temporal reference of the message,
- reception (203), by a control center (13) of the communication resource, of the capacity request,
- allocation (204) of the communication resource to the terminals of the first units, by performing a calculation of a centralized scheduling of messages by taking into account the temporal reference and the deadline requirement of messages,
- broadcasting (205) to the terminals of the first units, of an allocation plan determined from the calculated scheduling, and
- calculation of a minimum time of transmission of a message by the terminal on the basis of the size of the message, the calculation of the scheduling of messages also taking into account the minimum transmission time of messages.

2. Method for the optimized allocation of a communication resource according to claim 1, **characterized in that** it further comprises a calculation step, for each message, of a transmission date at the latest, the transmission date, at the latest, of a message being equal to its date of reception by the terminal plus its deadline requirement, and **in that** the messages are ordered in order of ascending transmission date at the latest.

3. Method for the optimized allocation of a communication resource according to one of the preceding claims, **characterized in that**, each message being associated with a priority, the capacity request indicates some priority information associated with the message, the step of allocation (204) of the communication resource to the terminals of the first units further comprising a processing of the requests in order of priority of the associated messages, the scheduling calculation being carried out for the messages of equal priority.

4. Method for the optimized allocation of a communication resource according to one of the preceding claims, **characterized in that** the communication resource is subdivided in time into frames identified by numbers, each frame being subdivided into time slots identified by numbers.

5. Method for the optimized allocation of a communication resource according to one of the preceding claims, **characterized in that** the capacity requests are transmitted without prior reservation of the communication resource.

6. Method for the optimized allocation of a communication resource according to claim 4, **characterized in that** the capacity requests are transmitted in a dedicated time slot, each one of the aircrafts having its own time slot dedicated to the transmission of capacity request.

7. Method for the optimized allocation of a communication resource according to one of the preceding claims, **characterized in that** the time reference is expressed in the form of an absolute date.

8. Method for the optimized allocation of a communication resource according to one of claims 1 to 6, **characterized in that** the time reference is expressed in the form of a relative date.

9. Method for the optimized allocation of a communication resource according to claims 4 and 8 taken in combination, **characterized in that** the relative date is expressed in the form of a frame number and a slot number.

10. Method for optimally allocating a communication resource according to one of the preceding claims, **characterized in that** the communication resource is a satellite communication resource, **in that** the first units are aircrafts and **in that** the second unit is a ground unit.

11. System of communication between aircrafts (11.1, ..., 11.4) and a ground unit (12) using a satellite communication resource, the system comprising:
a ground unit (12);
aircrafts (11.1, ..., 11.4), each one of the aircrafts comprising embedded applications and a terminal (41.1, 41.2) to communicate with the ground unit (12), so as to transmit messages from the aircraft embedded applications (11.1, ..., 11.4) towards the ground unit (12),
a message being associated with a priority, a deadline requirement and a size, wherein the aircraft terminals (41.1, 41.2) comprise means for receiving messages originating from the embedded applications and means for receiving the allocation plan of the resource originating from a control center (13),
storing means (42.1, 42.2) of a time reference associated with each message received from the embedded applications, transmission means to the control center (13) of a capacity request for at least one message, the request indicating the size of the message, the deadline requirement associated with the message and the time reference of the message;
a control center (13) dealing with the resource and comprising means for receiving the capacity request originating from the terminals, calculation means (43) of a centralized scheduling of messages according to the deadline requirement and the time references associated with the messages, and broadcasting means intended for the terminals of the allocation plan determined on the basis of the calculated scheduling;
means for calculating a minimum transmission time of a message by the terminal on the basis of the size of the message, the calculation of the scheduling of the messages also taking into account the minimum time of transmission of the messages.
